# EUROPEAN PATENT APPLICATION

(11) **EP 4 273 000 A1**
(43) Date of publication of application: **08.11.2023**
(21) Application number: 22171194.8
(22) Date of filing: 02.05.2022
(51) Int. Cl.: B60P 1/28, B60R 16/023, B60P 1/04

(54) **SAFETY DEVICE FOR A TIPPER TRUCK, ASSOCIATED TIPPER TRUCK AND CONTROL METHOD**

(71) Applicant: VOLVO TRUCK CORPORATION, 405 08 Göteborg (SE)
(72) Inventor: Yvk, Anjan, 560024 BANGALORE (IN); Badiger, Deepak, 580023 HUBLI (IN)
(74) Representative: Lavoix

(57) **Abstract**

This safety device (30) for a tipper truck (10) comprises proximity sensors (32) and is configured to switch to a triggered state when a foreign body is detected within a predetermined distance (D30) around the tipper truck by at least one of the proximity sensors. The tipper truck comprises a bucket (20) and a lifting device (22), which is powered by a power source (24) and which is configured to move the bucket (20) between a lowered position and a raised position.

For improved safety, the safety device (30) comprises cut-off means (34) configured to cut-off the lifting device (22) from the power source (24) when the bucket (20) is in the lowered position and when the safety device (30) is in the triggered state.

## Description

The present invention relates to a safety device for a tipper truck, to a tipper truck comprising such a safety device and to control method of such a safety device.

A tipper truck, also called dump truck, comprises a bucket to carry bulk materials such as ores, sand, etc. A lifting device is arranged on the tipper truck to move the bucket between a lowered position, where the bucket can be loaded, and a raised position, to unload the bucket. During unloading procedure, as the bucket is in the raised position, there is an increased risk of the tipper truck tilting, for various reason such as an uneven ground, an uneven unloading of the material pouring from the bucket, etc.

For accident prevention, it is therefore necessary to prevent unloading of the tipper truck when foreign bodies, such as people, other vehicles or buildings, are present in the vicinity of the tipper truck.

US-2014/0347483-A1 describes, for example, a safety device that sounds an alarm when a foreign body is detected in the proximity of a dump truck. Such alarm can however be ineffective in noisy operating conditions, and does not prevent human errors.

There is therefore a need for improved safety device for a tipper truck, which provides increased safety to the surroundings.

To this end, aspects of the invention pertains to a safety device for a tipper truck, wherein:
- the safety device comprises proximity sensors, configured to detect a foreign body within a predetermined distance of the tipper truck, the safety device being in a triggered state when a foreign body is detected within the predetermined distance by at least one of the proximity sensors,
- the tipper truck comprises a bucket and a lifting device that is configured to move the bucket between a lowered position and a raised position, the lifting device being powered by a power source.

According to the invention, the safety device comprises cut-off means, configured to cut-off the lifting device from the power source when the bucket is in the lowered position and when the safety device is in the triggered state.

Thanks to the invention, when the safety device is triggered, the lifting device is physically unable to raise the bucket, preventing human errors to occur. In other words, the safety of people and equipment around the tipper truck is increased.

Advantageously:
- the cut-off means are an air-gap switch.
- The cut-off means are an electromagnetic switch.

The invention also concerns a tipper truck, comprising a bucket and a lifting device that is configured to move the bucket between a lowered position and a raised position, the lifting device being powered by a power source, and a safety device as previously defined.

Advantageously:
- the predetermined distance varies according to an orientation around the tipper truck.
- In a transversal direction of the tipper truck, the predetermined distance is at least equal to a maximal height of the bucket in the raised position.
- The lifting device is linked to the power source by an electrical connection, whereas the cut-off means are arranged on the electrical connection and are configured to physically open the electrical connection.

Another aspect of the invention concerns a control method for a tipper truck as previously defined. The control method comprises the following steps:
a) with the proximity sensors, detecting whether a foreign body is present within the predetermined distance of the tipper truck,
b) if the bucket is in the lowered position and if the safety device is in the triggered state, cutting-off the lifting device from the power source with the cutoff means.

The invention will be better understood, and other advantages thereof will appear more clearly, in light of the following description of one embodiment of a safety device for a tipper truck, an associated tipper truck and a control method, provided solely as a nonlimiting example and done in reference to the appended drawings, in which:
- [Fig 1] figure 1 is a schematic side view of a tipper truck according to the invention, and
- [Fig 2] figure 2 is a logogram representing a control method according to the invention.

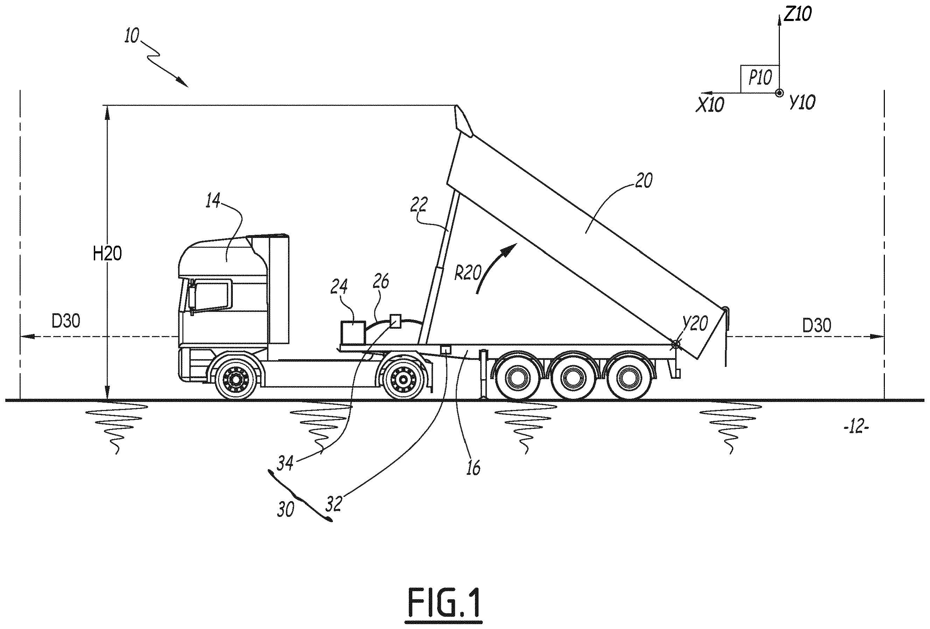

A tipper truck 10 according to the invention is shown on Figure 1. Within the scope of this description, the tipper truck 10 is also simply called truck 10. The tipper truck 10 is placed on ground 12. Overall, the ground 12 is supposed to be flat and horizontal.

The tipper truck 10 comprises a driving cabin 14 and a platform 16, which are arranged along a longitudinal axis X10 of the tipper truck 10. The longitudinal axis X10 is parallel to the ground 12. In the illustrated example, the longitudinal axis X10 is therefore horizontal. The following description is written in relation to the orientation of the various elements of the tipper truck 10 as illustrated on figure 1, whereas the tipper truck 10 can be oriented otherwise in reality.

For convenience, a transversal axis Y10 of the tipper truck 10 is also defined. The transversal axis Y10 is parallel to the ground 12 and orthogonal to the longitudinal axis X10. A height axis Z10, orthogonal to both the longitudinal axis X10 and the transversal axis Y10, is also defined. The height axis Z10 is therefore orthogonal to the ground 12. In the illustrated example, the height axis Z10 is vertical.

The tipper truck 10 comprises a bucket 20. The bucket 20 is arranged on the platform 16. The bucket 20 is hinged relative to the platform 16 around a rotation axis Y20, which is parallel to the transversal axis Y10. The bucket 20 is mobile in rotation relative to the platform 16 between a lowered position, wherein the bucket 20 is resting on the platform 16, so that the bucket can hold or receive bulk material, and a raised position, wherein bulk material received in the bucket 20 can be unloaded. On figure 1, the tipper truck 10 is shown in a raised configuration, where the bucket 20 is in the raised position. A movement of the bucket 20 from the lowered position to the raised position defines a lifting movement R20. The lifting movement R20 is represented by an arrow in an arc of circle centered on the rotation axis Y20.

The truck 10 also comprises a lifting device 22, to move the bucket 20 between the lowered and raised positions. The lifting device 22 is preferably a hydraulic device, represented here by a telescopic piston. The lifting device 22 usually comprises a hydraulic pump and is powered by a power source 24. The pump is not represented, while the power source 24 is schematically represented by a box arranged on the platform 16. The power source 24 is preferably an electric power source, such as a diesel generator, configured to generate electrical power for the lifting device 22. There is therefore an electrical connection 26, represented by a line on Figure 1, linking the power source 24 to the lifting device 22. For example, the electrical connection 26 comprises a cable or a busbar.

The tipper truck 10 also comprises a safety device 30, configured to prevent the lifting movement R20 when the bucket 20 is in the lowered position and when a foreign body, such as a person, another vehicle or a building, is detected at proximity of the tipper truck 10.

To that end, the safety device 30 comprises proximity sensors 32, which are each configured to detect a foreign body within a predetermined distance D30 of the tipper truck 10.

Known technologies for proximity sensors 32 include ultrasonic sensors, optical sensors, infrared sensors, RADAR or LIDAR sensors, etc. The proximity sensors 32 are preferably arranged in array around the tipper truck 10, in order to avoid blind spots. Preferably, several proximity sensors 32 are arranged symmetrically relative to a longitudinal plane P10 of the truck 10. The longitudinal plane P10 is a plane orthogonal to the transversal axis Y10. On figure 1, the truck 10 is viewed from the side, with only one proximity sensor 32 arranged on a side of the platform 16.

The technology, number and arrangement of the proximity sensors 32 are not limitative. In the illustrated example, the safety device 30 comprises two proximity sensors 32 of the same type, with only one sensor 32 visible on figure 1. Alternatively, the safety device 20 comprises several proximity sensors 32 of different types. Preferably, the safety device 30 comprises a processing unit configured to process the signals received from each proximity sensor 32. The processing unit is not represented.

When the proximity sensors 32 do not detect any foreign body within the predetermined distance D30 around the truck 10, the safety device 30 is in a waiting state. When a foreign body is detected within the predetermined distance D30 around the truck 10 by at least one of the proximity sensors 32, the safety device 30 is in a triggered state.

In the illustrated example, the predetermined distance D30 is measured around the truck 10, parallel to the ground 16. In a not shown alternative, the predetermined distance D30 is also measured along the height axis Z10, for example to detect if there is an obstacle above the truck 10.

In the illustrated example, the predetermined distance D30 is the same whichever the orientation around the truck 10. In the observation plane of figure 1, the predetermined distance D30 is materialized in front of the cabin 14 and in the back of the bucket 20.

In a not shown alternative, the predetermined distance D30 varies according to an orientation around the tipper truck 10. For example, the predetermined distance D30 in front of the driving cabin 14 is shorter compared to the predetermined distance D30 on the rear of the platform 16, in an unloading area.

When the bucket 20 is raised, the risk of having the truck 10 tilting sideways is higher than tilting frontwards or backwards. Preferably, the predetermined distance D30 along the transversal axis Y10 is at least equal to a maximal height H20 of the bucket 20 in the raised position, as illustrated on figure 1. The maximal height H20 is measured from the ground 12 along the height axis Z10.

The safety device 30 comprises cut-off means 34, which are arranged on the electrical connection 26, between the power source 24 and the lifting device 22. The cut-off means 34 are controlled by a control unit of the safety device 30 and are switchable between a closed configuration, where electrical power can flow through the electrical connection 26, and an open configuration, where electrical power cannot flow through the electrical connection 26. The control unit is not represented.

In other words, the cut-off means 32 are configured to prevent the transmission of electrical power through the electrical connection 26, from the power source 24 to the lifting device 22.

Preferably, the cut-off means 34 are an air-gap switch, configured to physically open the electrical connection 26 when the cut-off means 34 are in the open configuration. For example, the cut-off means 34 comprise an electromagnetic switch.

In other words, the cut-off means 34 are configured to cut-off the lifting device 22 from the power source 24 when the bucket 20 is in the lowered position and when the safety device 30 is in the triggered state, preventing the lifting movement R20.

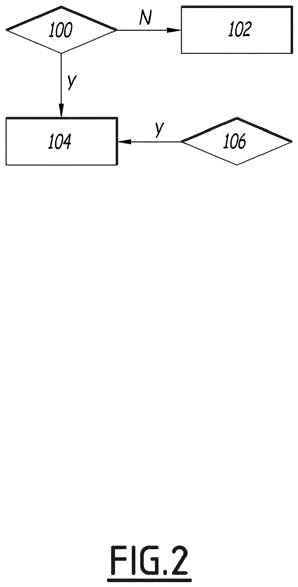

A control method for the tipper truck 10 is now described with reference to figure 2. The control method is applied when a user - usually a driver of the truck 10 - wishes to raise the bucket 20, in order to unload the material received in the bucket 20.

In a first step 100, foreign body detection around the tipper truck 10 is performed by means of each proximity sensor 32.

If no foreign body is detected within the predetermined distance D30 around the tipper truck 10, the safety device 30 switches to - or remains in - the waiting state. In a step 102, the cut-off means 34 are switched to - or remain in - the closed state, that is to say the lifting device 22 is connected to the power source 24.

If a foreign body is detected within the predetermined distance D30 around the tipper truck 10, in a step 104 the safety device 30 switches to the triggered state.

In a step 106, the safety device 30 tests whether the bucket 20 is in the lowered position or not.

If, at the same time, the safety device 30 is in the triggered state at step 104 and the bucket 20 is in the lowered position at step 106, then the cut-off means 34 are switched to the open configuration, disconnecting the lifting device 22 from the power source 24 and preventing the activation of the lifting device 22. The lifting movement R20 is prevented.

Even if the user does not realize that a foreign body has been detected within the predetermined distance D30 around the truck 10, the user is prevented to start the lifting movement R20 of the bucket 20, voluntarily or not. The safety device 30 and the associated control method offers a higher safety in case of tilting accidents.

The respective features of the different embodiments and variants of the safety device 30, of the tipper truck 10 and of the control method for the tipper truck 10 considered in this description can be combined.

## Claims

1. A safety device (30) for a tipper truck (10), wherein:
- the safety device (30) comprises proximity sensors (32), configured to detect a foreign body within a predetermined distance (D30) of the tipper truck (10), the safety device (30) being in a triggered state when a foreign body is detected within the predetermined distance (D30) by at least one of the proximity sensors (32),
- the tipper truck (10) comprises a bucket (20) and a lifting device (22) that is configured to move the bucket (20) between a lowered position and a raised position, the lifting device (22) being powered by a power source (24),
**characterized in that** the safety device (30) comprises cut-off means (34) configured to cutoff the lifting device (22) from the power source (24) when the bucket (20) is in the lowered position and when the safety device (30) is in the triggered state.

2. The safety device (30) according to claim 1, wherein the cut-off means (34) are an air-gap switch.

3. The safety device (30) according to claim 2, wherein the cut-off means (34) are an electromagnetic switch.

4. A tipper truck (10), comprising:
- a bucket (20) and a lifting device (22) that is configured to move the bucket (20) between a lowered position and a raised position, the lifting device (22) being powered by a power source (24), and
- a safety device (30) according to any one of previous claims.

5. The tipper truck (10) according to claim 4, wherein the predetermined distance (D30) varies according to an orientation around the tipper truck (10).

6. The tipper truck (10) according to any one of claims 4 or 5, wherein, in a transversal direction (Y10) of the tipper truck (10), the predetermined distance (D30) is at least equal to a maximal height (H20) of the bucket (20) in the raised position.

7. The tipper truck (10) according to any one of claims 4 to 6, wherein:
- the lifting device (22) is linked to the power source (24) by an electrical connection (26),
- the cut-off means (34) are arranged on the electrical connection (26) and are configured to physically open the electrical connection (26).

8. A control method for a tipper truck (10) according to any one of claims 4 to 7, wherein the control method comprises the following steps:
a) with the proximity sensors (32), detecting (100) whether a foreign body is present within the predetermined distance (D30) of the tipper truck (10),
b) if the bucket (20) is in the lowered position (106) and if the safety device (30) is in the triggered state (104), cutting-off the lifting device (22) from the power source (24) with the cutoff means (34).

## Amended claims

### Amended claims in accordance with Rule 137(2) EPC.

1. A safety device (30) for a tipper truck (10), wherein:
- the safety device (30) comprises proximity sensors (32), configured to detect a foreign body within a predetermined distance (D30) of the tipper truck (10), the safety device (30) being in a triggered state when a foreign body is detected within the predetermined distance (D30) by at least one of the proximity sensors (32),
- the tipper truck (10) comprises a bucket (20) and a lifting device (22) that is configured to move the bucket (20) between a lowered position and a raised position, the lifting device (22) being powered by an electric power source (24),
**characterized in that** the safety device (30) comprises cut-off means (34) configured to cut-off the lifting device (22) from the power source (24) when the bucket (20) is in the lowered position and when the safety device (30) is in the triggered state.

2. The safety device (30) according to claim 1, wherein the cut-off means (34) are an air-gap switch.

3. The safety device (30) according to claim 2, wherein the cut-off means (34) are an electromagnetic switch.

4. A tipper truck (10), comprising:
- a bucket (20) and a lifting device (22) that is configured to move the bucket (20) between a lowered position and a raised position, the lifting device (22) being powered by a power source (24), and
- a safety device (30) according to any one of previous claims.

5. The tipper truck (10) according to claim 4, wherein the predetermined distance (D30) varies according to an orientation around the tipper truck (10).

6. The tipper truck (10) according to any one of claims 4 or 5, wherein, in a transversal direction (Y10) of the tipper truck (10), the predetermined distance (D30) is at least equal to a maximal height (H20) of the bucket (20) in the raised position.

7. The tipper truck (10) according to any one of claims 4 to 6, wherein:
- the lifting device (22) is linked to the power source (24) by an electrical connection (26),
- the cut-off means (34) are arranged on the electrical connection (26) and are configured to physically open the electrical connection (26).

8. A control method for a tipper truck (10) according to any one of claims 4 to 7, wherein the control method comprises the following steps:
a) with the proximity sensors (32), detecting (100) whether a foreign body is present within the predetermined distance (D30) of the tipper truck (10),
b) if the bucket (20) is in the lowered position (106) and if the safety device (30) is in the triggered state (104), cutting-off the lifting device (22) from the power source (24) with the cutoff means (34).
